# FASCICULE DE BREVET EUROPEEN

(11) **EP 3 443 272 B1**
(45) Date de publication et mention de la délivrance du brevet: **19.02.2025**
(21) Numéro de dépôt: 17719653.2
(22) Date de dépôt: 29.03.2017
(51) Int. Cl.: B32B 3/08, B32B 5/02, B32B 5/20, B32B 5/26, B32B 19/02, B32B 19/06, C04B 30/02, C04B 111/20, C04B 111/76, F24C 15/34

(54) **DISPOSITIF FONCTIONNANT À HAUTE TEMPÉRATURE COMPRENANT UN PRODUIT ISOLANT, PRODUIT ISOLANT ADAPTÉ À UN TEL DISPOSITIF , ET PROCÉDÉS D'UTILISATION ET D'OBTENTION D'UN TEL PRODUIT ISOLANT**
VORRICHTUNG MIT HOHER BETRIEBSTEMPERATUR MIT EINEM ISOLIERENDEN PRODUKT, FÜR SOLCH EINE VORRICHTUNG GEEIGNETES ISOLIERENDES PRODUKT UND VERFAHREN ZUR VERWENDUNG UND HERSTELLUNG SOLCH EINES ISOLIERENDEN PRODUKTS
DEVICE OPERATING AT HIGH TEMPERATURE COMPRISING AN INSULATING PRODUCT, INSULATING PRODUCT SUITABLE FOR SUCH A DEVICE, AND PROCESSES FOR USING AND OBTAINING SUCH AN INSULATING PRODUCT

(30) Priorité: 11.04.2016 FR 1653168
(43) Date de publication de la demande: 20.02.2019
(73) Titulaire: SAINT-GOBAIN ISOVER, 92400 Courbevoie (FR)
(72) Inventeur: PONS Y MOLL, Olivier, 60600 AGNETZ (FR); FABRA PUCHOL, Maria, 60300 Chamant (FR)
(74) Mandataire: Saint-Gobain Recherche
(86) Numéro de dépôt international: PCT/FR2017/050726
(87) Numéro de publication internationale: WO 2017/178726

(56) Documents cités:
- EP-A1- 2 832 690
- WO-A1-2009/014913
- WO-A1-2013/083474
- WO-A1-2014/126490
- CN-A- 103 195 985
- CN-A- 104 671 737
- DE-A1- 102011 018 171
- DE-A1- 19 622 865
- DE-A1- 3 713 526
- JP-A- 2017 114 744
- US-A- 5 738 801
- US-A- 6 080 475
- US-A- 6 083 619
- US-A1- 2011 206 471
- US-A1- 2013 196 137
- US-A1- 2014 057 083
- US-A1- 2014 057 083
- US-A1- 2016 096 949
- JING XIAO LIU ET AL: "Preparation and Characterization of Silica Aerogels/Glass Wool Composites", ADVANCED MATERIALS RESEARCH, vol. 534, 1 June 2012 (2012-06-01), pages 106 - 109, XP055289753, DOI: 10.4028/www.scientific.net/AMR.534.106

## Description

La présente invention concerne une installation (ou appareil ou dispositif) susceptible d'opérer à haute température, en particulier à des températures jusqu'à 550°C et notamment comprises entre 50 et 350°C, telle qu'un four de cuisson, en particulier un four destiné à l'usage domestique, ainsi qu'un produit d'isolation thermique adapté à l'isolation de ladite installation ou dudit four, en particulier adapté à l'isolation de caissons de chauffe desdits fours.

Il est connu d'isoler des parties ou des composants du four, par exemple l'enceinte (ou chambre ou caisson) de cuisson (ou de chauffe), ou des composants tels qu'une ou des sources d'éclairage du four, pour protéger notamment les composants du four présents autour de l'enceinte ou les parties externes du four, de la chaleur ou de la surchauffe, ainsi que pour éviter les pertes de chaleur à l'extérieur de l'enceinte, cette isolation permettant ainsi d'améliorer les performances énergétiques du four de cuisson lors de son utilisation. Les isolants utilisés doivent être en mesure de résister aux températures élevées auxquelles ils sont confrontés et de conserver leurs performances isolantes à ces températures sans risque de dégradation ou d'émissions potentiellement dangereuses pour la santé.

Les fours sont le plus souvent isolés avec des isolants fibreux, à base notamment de fibres synthétiques telles que la laine de verre ou la laine de roche, par exemple en utilisant des couches isolantes à base de tissus de fibres de verre ou de laine minérale, les performances thermiques de ces isolants se traduisant par des valeurs de conductivité thermique λ (mesurées en particulier selon la norme ISO 8302) supérieures à 32-35 mW/m.K, en particulier de l'ordre de 40 mW/m.K, à température ambiante, ces valeurs augmentant vite toutefois avec la température (par exemple étant de l'ordre de 60 mW/m.K à 200°C, de l'ordre de 90 mW/m.K à 300°C et de l'ordre de 120 mW/m.K à 400°C) et la consommation énergétique des fours usuels restant relativement importante.

La plupart des autres isolants existants dans d'autres applications ne sont quant à eux généralement pas adaptés à l'isolation d'installations soumises à de hautes températures, ces matériaux présentant le cas échéant de meilleures performances thermiques à température ambiante mais pouvant se dégrader ou perdre leurs bonnes performances thermiques à haute température ou dans le temps. C'est le cas par exemple des isolants organiques cellulaires de type polymère expansé ou mousses, ces matériaux se dégradant notamment à haute température. De la même façon, les isolants sous vide, de même que les aérogels, ne sont traditionnellement pas utilisés dans les fours, ces isolants de par leur nature et/ou constitution et/ou composants présentant des risques potentiels de dégradation ou de perte de leurs performances thermiques à haute température.

Les documents de l'état de l'art US 2014/057083 A1, US 6083619 A, US 5738801 A et WO 2014/126490 A1 sont pertinents par rapport à la présente invention.

Même si les fours usuels donnent satisfaction, les électroménagistes, de même que les utilisateurs, restent demandeurs d'améliorations des performances en matière de consommation énergétique des fours, avec des produits fonctionnels et efficaces dès la première utilisation, de constitution solide et sûre, ces produits conservant leurs performances dans le temps.

La présente invention a donc cherché à mettre au point une nouvelle installation (ou appareil ou dispositif), en particulier domestique ou ménagère, fonctionnant à haute température (en particulier comprise entre 50 et 350°C), telle qu'un four de cuisson, et présentant de bonnes performances thermiques sur toute sa gamme de températures d'utilisation (en particulier entre 50°C et 350°C), ainsi qu'une consommation énergétique améliorée, cette installation pouvant en outre être utilisée efficacement et sans risques dès sa première utilisation.

Ce but a été atteint par le dispositif (ou appareil) selon l'invention, fonctionnant entre 50 et 350°C, ce dispositif comprenant (ou étant muni de ou revêtu de) au moins un produit isolant, ledit produit étant formé d'au moins un matériau isolant (thermiquement) à base d'aérogel(s), avantageusement sous forme d'au moins une couche, en particulier d'au moins une couche fibreuse, à base d'aérogel(s) (ou renfermant des aérogels), ledit produit comprenant moins de 0.55% en poids d'agent(s) hydrophobant(s), en particulier moins de 0.5% avantageusement moins de 0.4%, voire moins de 0.25%, notamment moins de 0.1%, voire moins de 0.05% en poids d'agent(s) hydrophobant(s), et de préférence étant dénué, d'agent(s) hydrophobant(s).

Comme indiqué ultérieurement et de préférence selon l'invention, le taux de composants organiques dans le produit isolant précité est également inférieur à 5.5% en poids dudit produit, en particulier inférieur à 3%, de préférence inférieur à 1.65%, le produit pouvant être en particulier uniquement minéral.

La présente invention concerne également le produit d'isolation thermique (ou isolant ou produit isolant) adapté à l'isolation du dispositif (utilisable à) haute température précité, et son utilisation dans cette application, ce produit pouvant être obtenu de diverses façons (en particulier par voie directe, ou encore à partir de produits existants grâce à un procédé de traitement (ou de transformation)), ainsi qu'un procédé possible d'obtention dudit produit à partir de produits isolants existants.

Le produit isolant selon l'invention, en particulier adapté (ou destiné) à l'isolation de fours (notamment à usage domestique), est un produit formé d'au moins un matériau isolant (thermiquement) formé (au moins en partie) d'aérogel(s) (ou à base d'aérogel(s) ou renfermant des aérogels ou de l'aérogel), ledit produit ou matériau se présentant sous forme d'au moins une couche fibreuse (ou à base de fibres), renfermant du ou des aérogels, ledit matériau (ou ladite couche) comprenant en particulier de 25 à 95% en poids d'aérogel(s) (et généralement de 5 à 75 % en poids de fibres dans le cas de couche(s) fibreuse(s) formée(s) d'aérogel(s)), ledit produit comprenant moins de 0.55 % en poids d'(agent(s) ou composé(s)) hydrophobant(s) (regroupant le(s) silicone(s) et l'hexamethyldisilazane), avantageusement moins de 0.5%, notamment moins de 0.4%, en particulier moins de 0.25%, notamment moins de 0.1%, voire moins de 0.05% en poids d'agent(s) hydrophobant(s), et de préférence étant dénué d'hydrophobant(s).

Les aérogels sont connus comme isolants dans d'autres applications, ces aérogels se présentant notamment sous forme de granules translucides ou de poudre fine, et étant performants à température ambiante en termes d'isolation thermique, ces aérogels pouvant être utilisés au sein de mats (ou nappes) formés de fibres enchevêtrées. Ces aérogels sont difficiles et coûteux à obtenir à l'échelle industrielle, nécessitent des conditions de séchages délicates et sont sensibles à l'eau pouvant dégrader leurs propriétés d'isolation thermique, notamment dans le temps. Ils comprennent ainsi traditionnellement des composants hydrophobants issus du procédé de synthèse des aérogels et/ou issus des additifs ajoutés lors de la fabrication de ces isolants. De façon surprenante pourtant, la présente invention a mis en évidence que la suppression de ces hydrophobants ou l'absence de ces hydrophobants dans les isolants à base d'aérogels pour l'utilisation dans les fours, n'affecte pas significativement les propriétés d'isolation de ces isolants aux températures d'utilisation pour cette application, l'isolation obtenue étant particulièrement satisfaisante et améliorée par rapport à celle obtenue avec les isolants pour fours traditionnels. De façon également surprenante, l'utilisation de ces produits selon l'invention permet d'améliorer les performances en matière de consommation énergétique des fours équipés de ces produits. En outre, ces produits ou les fours équipés de ces produits ne présentent pas de risques d'émission de produits toxiques, et ce dès leur première utilisation.

Le produit isolant utilisé selon l'invention peut être obtenu directement ou à partir de produits (comprenant des hydrophobants) existants, ces produits ayant été dans ce cas "déshydrophobés" (les agents hydrophobants ayant été limités ou préférentiellement retirés ou détruits, par exemple par calcination comme explicité ci-après).

Ainsi, un procédé possible et satisfaisant d'obtention d'un produit isolant selon l'invention à partir de produits existants comprend au moins une étape d'extraction du ou des (agents) hydrophobants (ou étape de "déshydrophobation") d'un matériau isolant à base d'aérogel(s) ou d'un produit incorporant ledit matériau (en particulier d'un produit commercial), ledit matériau ou ledit produit comprenant notamment de 25 à 95% en poids d'aérogel(s). Cette étape d'extraction est effectuée en particulier en soumettant ledit produit ou matériau à un traitement thermique (ou (étape de) calcination) à une température d'au moins 320°C, de préférence d'au moins 350°C, et avantageusement inférieure à 550°C, notamment inférieure à 450°C, pendant au moins 10 heures, et de préférence pendant au moins 12 h, et avantageusement pendant moins de 20 h, de façon notamment à calciner ou détruire, en totalité ou au moins en partie, les agents hydrophobants présents, en particulier de façon que le taux d'hydrophobant(s) au sein du produit ou du matériau isolant à base d'aérogel(s) soit/devienne inférieur à 0.55% en poids (par rapport au poids dudit produit ou matériau), avantageusement inférieur à 0.5%, notamment inférieur à 0.4%, en particulier inférieur à 0.25%, notamment inférieur à 0.1 %, voire inférieur à 0.05% en poids, voire nul.

Ce procédé de traitement permet de transformer des aérogels commerciaux afin de les rendre compatibles avec une utilisation comme isolants thermiques dans les fours de cuisson selon l'invention, en particulier dans les caissons de chauffe desdits fours, cette transformation n'engendrant pas de dégradations préjudiciables comme indiqué précédemment.

L'utilisation du produit selon l'invention, obtenu directement ou par un traitement de produits déjà existants (consistant en la suppression ou l'extraction de certains composants choisis servant ou ayant servi à la fabrication des aérogels), n'empêche ainsi pas d'obtenir des bonnes propriétés d'isolation thermique et permet en outre d'améliorer les performances des fours par rapport à celles des fours utilisant des isolants habituels en fibres minérales, tout en satisfaisant aux impératifs en termes de sécurité, de santé et d'environnement.

En particulier, on note que le produit ou le four équipé du produit reste en dessous du seuil d'émission de composants organiques volatils (VOC) escompté dans cette utilisation, et ce dès sa première utilisation (l'isolant selon l'invention étant donc prêt à l'emploi et pouvant être inséré dans les fours sans traitement préalable), en particulier présente avantageusement une émission de formaldéhyde (ou formol) inférieure ou égale à 10 mg/kg (c'est à dire inférieure ou égale à 10 mg de formol émis/relargué par kg dudit produit isolant), en particulier inférieur ou égal à 8 mg/kg, de préférence inférieur à 5 mg/kg, voire inférieur à 3 mg/kg, cette émission étant mesurée selon la norme NF EN 120 et correspondant approximativement à l'émission maximale sur 12 heures atteinte par l'isolant au cours de n'importe quel exercice de chauffe - cuisson, pyrolyse - du four muni dudit produit isolant, la température de chauffe étant comprise entre 50°C et 550°C (et en pratique étant généralement comprise entre 50 et 240°C).

Le produit isolant thermique selon l'invention présente également une bonne résistance au feu, une bonne tenue mécanique et une bonne durabilité (ou tenue au vieillissement). Il présente en particulier une résistance au feu de classe A1 selon la norme EN 13501-1, et une conductivité thermique inférieure à 50 mW/m.K, de préférence inférieure à 40 mW/m.K, voire inférieure à 35 mW/m.K à la température de 200°C (la conductivité thermique étant mesurée selon la norme ISO 8302), cette conductivité étant encore bien inférieure à température ambiante. Avantageusement, le produit isolant selon l'invention présente en outre une conductivité thermique inférieure à 50 mW/m.K, en particulier inférieure à 40 mW/m.K, à 300°C, ainsi qu'une conductivité thermique inférieure ou égale à 60 mW/m.K en particulier inférieure à 55 mW/m.K, à 400°C.

Le matériau à base d'aérogels formant la structure du produit selon l'invention peut intégrer des aérogels sous différentes formes (en particulier sous formes de billes ou particules) ou synthétisés de différentes façons.

Les aérogels sont généralement obtenus à partir d'un gel, fabriqué par exemple par hydrolyse en présence d'un solvant puis gélification avec catalyse à partir d'un précurseur puis par évaporation ou extraction du liquide formant le gel (par exemple en conditions supercritiques ou sub-critiques) afin de remplacer ledit liquide par un gaz (en particulier de l'air) sans effondrement de la structure poreuse. Les aérogels ainsi formés sont des matériaux hautement poreux, à pores ouverts, et dont la taille des pores est nanométrique.

Les aérogels présents dans le produit selon l'invention sont avantageusement des aérogels inorganiques, en particulier à base d'oxydes, tels que des aérogels à base de silice, d'aluminium et/ou de titane. De préférence, le produit selon l'invention comprend au moins un aérogel de silice comme aérogel(s), et de préférence comprend essentiellement (pour au moins 50 %, et de préférence pour 100%, en poids des aérogels) ou uniquement des aérogels de silice.

Avantageusement, que le produit ou matériau formé d'aérogel(s) selon l'invention soit formé d'une ou de plusieurs parties ou couches isolantes à base d'aérogel(s), chaque partie ou couche présente de préférence un taux d'aérogel(s) compris entre 25 et 95%, et de préférence compris entre 40 et 85% en poids de ladite partie ou couche ou partie, le taux d'aérogel(s) au sein du produit (final) isolant selon l'invention étant également avantageusement compris entre 25 et 95% (en poids du produit), de préférence entre 40 et 85%.

Selon l'invention, le ou les matériaux ou couches à base d'aérogel(s) utilisés ou traités et formant la structure du produit isolant selon l'invention sont une ou des couches fibreuses (ou formées de fibres), en particulier de type mat(s) (ou matelas ou nappe(s) formé(s) de fibres (en particulier fils et/ou filaments) enchevêtrées), formant une structure poreuse ou « discontinue », renfermant des aérogels. Chaque couche fibreuse peut être formée de façon connue, par exemple par dépôt de fibres, issues d'une filière ou d'un autre dispositif de fibrage (en particulier obtenues par centrifugation puis étirées), sur un tapis, et éventuellement jonction des fibres entre elles par accrochage mécanique, notamment par aiguilletage, ou par liaison chimique au moyen d'un liant appliqué sur les fibres. Les aérogels peuvent être intégrés aux fibres de différentes façons, soit par mélange avec des aérogels préformés (fabriqués indépendamment des couches fibreuses), soit par imprégnation des couches fibreuses par ou dans une solution permettant de former les aérogels in situ, par exemple en imprégnant les couches par (une solution contenant) les réactifs permettant d'obtenir les aérogels, l'extraction du liquide et la gélification étant opérés (en particulier en conditions supercritiques) afin d'obtenir des couches isolantes renfermant des aérogels. Des exemples de couches, ou mats, d'aérogels (renforcés par des fibres) réalisés par imprégnation sont notamment des mats d'aérogels commercialisés sous la référence Spaceloft^{®} ou Cryogel par la société Aspen Aerogel Inc.

Chaque couche fibreuse peut être formée de différents types de fibres (inorganiques et/ou organiques). De préférence, on choisit des couches fibreuses telles qu'une majorité (au moins 50% en poids, en particulier au moins 75% ou au moins 80% en poids des fibres), voire avantageusement l'ensemble, des fibres de chaque couche, sont des fibres inorganiques/minérales, ces fibres pouvant notamment être choisies parmi les fibres de verre (ou la laine de verre), les fibres de roche (ou la laine de roche), les fibres céramiques, les fibres de basalte, etc, et étant de préférence des fibres de verre (par exemple de verre E ou C), ou de roche. Le cas échéant, il est possible d'avoir une faible proportion de fibres organiques (telles que des fibres de polyéthylène, de polypropylène, de polyacrylonitrile, de polyamide, d'aramide, de polyester, d'acide polylactique, de polytéréphtalate d'éthylène (PET), etc).

Les couches fibreuses utilisées le cas échéant sont avantageusement poreuses et respirantes, c'est-à-dire perméables à la diffusion de vapeur d'eau et d'air. Elles présentent préférentiellement (chacune) une masse volumique comprise entre 8 et 90 kg/m³, en particulier entre 20 et 90 kg/m³, notamment de l'ordre de 30 à 80 kg/m³.

Les matériaux à base d'aérogels disponibles commercialement comprenant généralement, outre les aérogels et le cas échéant les fibres précitées, des composants organiques issus de leur fabrication, tels que des agents hydrophobants comme vu précédemment, le produit selon la présente invention sélectionne en outre le matériau ou la ou les couches à base d'aérogels le formant en ce qu'ils comprennent nécessairement moins de 0.55 % d'agent(s) hydrophobant en vue de leur utilisation dans des fours, comme indiqué selon l'invention, de tels matériaux ou couches pouvant être obtenues directement en supprimant ou limitant le recours à des hydrophobants pendant la fabrication de ces matériaux afin d'obtenir les taux requis ou en utilisant le procédé de traitement mentionné selon l'invention à partir des matériaux ou couches à base d'aérogels disponibles commercialement.

Comme déjà indiqué, il est courant dans les procédés habituels d'obtention des matériaux à base d'aérogels destinés à l'isolation thermique (principalement de parois de bâtiments ou éventuellement de containers ou canalisations), d'ajouter un agent hydrophobant, principalement du silicone ou de l'hexamethyldisilazane, dans la composition initiale permettant d'obtenir les aérogels ou pendant la synthèse desdits aérogels ou sur le produit résultant de ladite synthèse, l'hydrophobation (ou opération visant à rendre le matériau hydrophobe) par l'agent hydrophobant ayant notamment pour but d'améliorer la résistance au vieillissement du produit obtenu et/ou étant considéré comme permettant de contribuer à l'obtention d'une faible conductivité thermique. Le taux d'agent(s) hydrophobant, en particulier de silicone, et/ou d'hexamethyldisilazane, au sein des matériaux à base d'aérogels obtenus, notamment au sein des matériaux à base d'aérogels disponibles commercialement pour l'isolation thermique (généralement de parois de bâtiments), peut ainsi aller jusqu'à 10% en poids (par rapport au poids du ou des matériaux à base d'aérogel).

Par agent hydrophobant, on entend un agent (ou additif ou composé), formé le cas échéant d'un ou plusieurs composants, permettant de rendre le produit l'incorporant hydrophobe, ce pouvoir d'hydrophobation étant notamment évalué en mesurant l'absorption d'eau (valeur d'absorption d'eau exprimée en kg/m² selon la norme EN 1609 ou en pourcentage selon la norme ASTM C1511). Selon l'invention, le taux d'agent(s) hydrophobant présent(s) par rapport à l'ensemble des composés présents (en sec/par rapport à l'extrait sec) dans le produit selon l'invention est avantageusement (rendu ou choisi) inférieur à 0.55%, avantageusement inférieur à 0.5%, notamment inférieur à 0.4%, en particulier inférieur à 0.25%, notamment inférieur à 0.1%, voire inférieur à 0.05% en poids, voire nul, ces agents étant le silicone et/ou l'hexaméthyldisilazane précités. Avantageusement, le taux d'agent(s) hydrophobant dans chaque partie du produit selon l'invention (dont le matériau formé d'aérogel(s)) est également inférieur à 0.55%, avantageusement inférieur à 0.5%, notamment inférieur à 0.4%, en particulier inférieur à 0.25%, notamment inférieur à 0.1%, voire inférieur à 0.05% en poids, voire nul. Comme indiqué précédemment, la réduction de ce taux d'agent(s) hydrophobant, non seulement n'impacte pas de façon significative les propriétés d'isolation thermique et/ou la résistance au vieillissement du produit obtenu, dans les conditions de son utilisation en fours, même après plusieurs cycles de cuisson, mais le four ainsi équipé présente de meilleurs rendements et le taux d'émission de formol, avantageusement de COV reste en outre inférieur ou égal à 10 mg/kg (mesuré selon la norme NF EN 120- méthode de mesure avec tube chaud à 350°C). Comme indiqué précédemment, ces effets sont particulièrement surprenants car il est traditionnellement considéré que l'agent hydrophobant est essentiel pour garantir une faible conductivité des aérogels (l'aérogel étant alors protégé contre l'absorption d'eau à température ambiante, absorption qui ne le rendrait plus isolant/le rendrait conducteur).

Chaque matériau ou couche isolante utilisé(e), outre le fait qu'il ou elle présente un taux d'hydrophobant limité, est également avantageusement essentiellement (voire uniquement) minéral(e). Le taux de composants organiques présents (évalué notamment en mesurant la masse du matériau avant et après calcination) est avantageusement inférieur à 5.5%, en particulier inférieur à 3%, de préférence inférieur à 1.65%, en poids du produit (et peut être également réduit par le procédé précité). Le matériau ou la couche peut le cas échéant comprendre un liant (en particulier à base aqueuse, ce liant pouvant le cas échéant comprendre différents composés organiques ou inorganiques (résine(s), additif(s), etc.)), à un taux inférieur à 10 % en poids de matière sèche par rapport au matériau ou à la couche, ce liant permettant le cas échéant dans une couche fibreuse de lier les fibres entre elles. Des charges inorganiques et/ou un ou des additifs de préférence inorganiques, à des taux n'excédant pas 5% en poids peuvent éventuellement être présents dans le produit selon l'invention, notamment lorsqu'une ou plusieurs propriétés et/ou fonctions sont recherchées (présence par exemple d'un opacifiant).

Le produit selon l'invention (ou chaque matériau ou couche isolant(e) renfermant des aérogels) comprend généralement (ou est formée) de 25 à 95% (en particulier de 40 à 85%) en poids d'aérogel(s) (de préférence inorganique(s)), et le cas échéant de 5 à 75 % (en particulier de 20 à 40 %) en poids de fibres, de préférence (pour au moins 50% en poids, et avantageusement jusqu'à 100% en poids, d'entre elles) inorganiques (en particulier de fibres de verre ou de roche). Ce produit est de préférence d'épaisseur limitée, son épaisseur n'excédant pas 50 mm, et étant avantageusement inférieure à 35 mm (l'épaisseur de chaque couche le cas échéant pouvant être comprise entre 5 et 35 mm).

Le produit selon l'invention est généralement formé d'un seul type de matériau à base d'aérogels ou d'une seule couche isolante (avec un surfaçage éventuel) mais il peut également comprendre plusieurs parties ou couches isolantes, liées par exemple par collage ou superposées, ce produit pouvant être plus ou moins dense (par exemple de densité comprise entre 100 kg/m³ et 250 kg/m³), les fibres formant le cas échéant ce produit (outre les aérogels) étant préférentiellement (majoritairement, à au moins 80% en poids des fibres) des fibres de verre E ou C (et comprenant éventuellement une faible proportion de fibres organiques, en particulier de type PET). Le produit selon l'invention peut être agrémenté le cas échéant d'un surfaçage, par exemple en voile de verre, notamment pour limiter la poussière et/ou être recouvert sur son ou ses chants par un scotch adhésif, par exemple en aluminium, pour la même raison.

Le produit isolant selon l'invention se présente généralement sous forme semi-rigide et peut être fixé sur ou autour des parois ou éléments à isoler par différents moyens (collage, agrafage, fixation par vis, cerclage, etc).

Il convient en particulier à l'isolation de tout ou partie du caisson de chauffe des fours (qu'il s'agisse de la porte, de la face arrière ou des faces latérales, appelées également ceinture), et/ou à l'isolation et à la protection de certains éléments du four (tels que des lampes). L'isolant est positionné en particulier autour ou sur les parois ou les éléments concernés.

Les performances thermiques de l'isolant selon l'invention se traduisent par des valeurs de conductivité thermique λ avantageusement inférieures à 50 mW/m.K, de préférence inférieure à 40 mW/m.K, voire inférieure à 35 mW/m.K à la température de 200°C (cette conductivité étant encore bien inférieure à température ambiante), avantageusement inférieure à 50 mW/m.K, voire inférieure à 40 mW/m.K, à 300°C, et de façon particulièrement avantageuse inférieure ou égale à 60 mW/m.K, voire inférieure à 55 mW/m.K, à 400°C. La conductivité thermique λ (en W/m.K) représente la quantité de chaleur passant au travers de l'isolant (d'un mètre d'épaisseur, par m²). Les valeurs de conductivité thermique λ (comparées à pression, en particulier à pression atmosphérique (1 bar), et température identiques, sont mesurées au moyen de la méthode de la plaque chaude gardée (norme ISO 8302).

Le produit selon l'invention présente un bon compromis en termes de conductivité thermique, d'émission de COV et de résistance au feu, et est conforme aux exigences en matière d'hygiène et sécurité. La mesure du taux de formol émis est faite notamment dans la présente invention selon la norme NF EN 120 (en particulier en plaçant 10 g d'échantillon dans un four tubulaire à 350°C, un courant gazeux d'air reconstitué traversant l'échantillon pendant 1h, le formol dégagé étant piégé dans 2 barboteurs en série remplis de 50 ml d'eau, et sa quantité cumulée dans les 2 barboteurs étant mesurée par la méthode Lange), en effectuant la mesure sur un four tubulaire Hermann Moritz). Le taux de formol du produit selon l'invention est inférieur à 10 mg, voire inférieur ou égal à 8 mg de formol par kg de produit, de préférence inférieur à 5 mg/kg, voire inférieur à 3 mg/kg.

Le procédé d'obtention du produit peut le cas échéant comprendre une étape de finition et conditionnement, et/ou une étape de découpe. Il est notamment possible de recouper les bords du produit isolant ou de découper la ou les couches ou matériaux renfermant les aérogels aux dimensions requises. Un matériau de revêtement peut le cas échéant être appliqué en surface afin de protéger le produit ou le renforcer, par exemple un voile, un scotch, un enduit, etc.

Le dispositif ou appareil selon l'invention est de préférence un four, voire une partie de four, en particulier une enceinte de cuisson, notamment à usage domestique ou éventuellement autre (par exemple à usage industriel), au sein duquel les températures peuvent atteindre occasionnellement 450°C par exemple, voire 55O°C voire éventuellement plus, ce dispositif comprenant ou étant revêtu d'au moins un produit isolant tel que précédemment défini. Avantageusement, le dispositif selon l'invention ne comprend comme produit(s) isolant(s) que l'un ou plusieurs des produits isolants selon l'invention précités.

La présente invention et ses avantages seront mieux compris à la lecture des exemples qui suivent, uniquement donnés à titre illustratif et qui ne peuvent en aucun cas être considérés comme limitatifs.

Dans l'exemple selon l'invention, on a formé un produit à partir d'un matelas isolant sous la forme de mat imprégné d'aérogels de silice analogue aux produits de type Pyrogel^{®} XT-E commercialisés par la société Aspen Aerogel Inc., ce matelas présentant une densité de 0.20 g/cm³. Le produit formé selon l'invention est uniquement formé de mat imprégné et présente une épaisseur de 20 mm. Il est ensuite traité thermiquement à 350°C pendant 12h. Un suivi des espèces volatiles à l'issue du traitement a montré que le produit final a une composition finale contenant moins de 0.2 % d'agent hydrophobant.

La mesure de conductivité thermique a été effectuée selon le principe de la plaque chaude gardée selon la norme ISO 8302 à une température de 200°C et à pression atmosphérique.

Le mesure du taux de formol émis a été effectuée sur un four tubulaire Hermann Moritz selon la norme NF EN 120.

Les résultats obtenus ont été les suivants:
- conductivité thermique λ à 200°C : 30 mW/m.K
- conductivité thermique λ à 300°C : 39 mW/m.K
- émission de formol par kg de produit : 10 mg/kg

La conductivité thermique de ce produit a été comparée à celle obtenue avec un produit habituel pour l'isolation de fours formé d'une laine minérale (exemple de référence), ce produit étant par exemple le produit commercialisé sous la référence TNF80/20 par la société Saint-Gobain Isover France, la conductivité thermique obtenue pour ce produit habituel à 200°C étant de l'ordre de 55 à 70 mW/m.K et celle obtenue pour ce produit habituel à 300°C étant de l'ordre de 75 mW/m.K.

Un four, de référence De Dietrich CZ5702359 commercialisé par la société Brandt, a également été équipé d'une ceinture intérieure isolante en utilisant en premier lieu pour former cette ceinture le produit standard selon l'exemple de référence, puis en le remplaçant par le produit selon l'invention selon l'exemple, et la consommation des fours a été mesurée selon la norme EN60350. Les mesures d'échauffement à coeur de l'élément à chauffer ont été réalisées sur une brique commercialisée sous la référence Hipor par la société Skamol, la brique ayant été préalablement séchée, puis immergée dans un bain d'eau placé au moins 8 heures au réfrigérateur jusqu'à une température de brique (mesurée dans la brique par deux thermocouples) de 5°C, la brique saturée d'eau et égouttée pendant environ 1min étant ensuite placée au centre du four.

La mesure de la consommation énergétique du four a été faite pour deux positions de cuisson, la température ambiante de l'environnement du four étant d'environ 23°C , une position traditionnelle selon la norme EN60350 avec des échauffements de l'ordre de 140° (correspond à une température au centre du four de 163°C (140°C d'échauffement par rapport à 23°C en température ambiante)), 180° et 220°, et une position ventilation forcée selon la norme EN60350 avec des échauffements de 135°, 155° et 175°, l'essai se terminant lorsque le dernier des deux thermocouples présents dans la brique fait état d'un échauffement de 55° (température absolue de 60°C, la température initiale de la brique étant de 5°C). La moyenne arithmétique des consommations énergétiques pour chaque température d'échauffement a alors été calculée, conformément à la norme EN60350.

Dans le cas du four présentant une ceinture isolante formée du produit standard selon l'exemple de référence, la consommation du four a été de 760 Wh, et dans le cas du four présentant une ceinture isolante formée du produit selon l'invention selon l'exemple 1, la consommation du four a été de 630 Wh.

Les résultats obtenus montrent que l'utilisation des produits selon l'invention pour l'isolation de fours domestiques ou pour d'autres utilisations à haute température permet d'obtenir, pour les fours que ces produits équipent, des performances énergétiques améliorées, l'absence d'hydrophobant ou la calcination de l'hydrophobant par traitement thermique ne résultant pas en outre en une dégradation des performances thermiques de l'isolant, ledit isolant présentant des performances isolantes particulièrement satisfaisantes même à haute température, l'émission de formol ou COV étant en outre particulièrement limitée malgré les températures d'utilisation (10 mg/kg de formol étant une limite admissible pour pouvoir être utilisé dans les fours de cuisson).

En comparaison sur ce dernier point, on a formé un produit à partir d'un mat imprégné d'aérogels de type Pyrogel^{®} XT-E analogue à celui de l'exemple selon l'invention mais qui n'a pas subi de traitement thermique. L'analyse de sa teneur en matières organiques était typique d'une composition contenant plus de 1 % en poids d'agent hydrophobant. On a obtenu pour ce produit une conductivité thermique λ = 28 mW/m.K à 200 °C et une émission de formol par kg de produit supérieure à 500 mg/kg beaucoup trop élevée pour un usage en four de cuisson domestique. De la même façon, avec un traitement thermique moins drastique du produit (à 200°C pendant 12h), l'analyse du produit était typique d'une composition contenant toujours plus de 1% en poids d'agent hydrophobant et l'on a obtenu pour ce produit une conductivité thermique λ = 30 mW/m.K à 200 °C et une émission de formol par kg de produit de 150 mg/kg également trop élevée pour un usage en four de cuisson domestique. A l'inverse, un produit issu d'un traitement thermique à 500°C pendant 12h a révélé une analyse typique d'une composition contenant moins de 0.1 % d'agent hydrophobant (exemple conforme à l'invention) et l'on a obtenu pour ce produit une conductivité thermique λ = 34 mW/m.K à 200 °C et une émission de formol par kg de produit particulièrement satisfaisante de 2 mg/kg

Le produit isolant utilisé selon l'invention est notamment adapté à l'isolation de parois ou de composants de fours électroménagers mais peut également être utilisé avec avantage pour l'isolation thermique de toute autre surface, en particulier pour des applications (ou pour l'isolation de produits soumis à) haute température.

## Revendications

1. Produit isolant adapté à l'isolation thermique d'un four ou d'une partie de four, ledit produit étant formé d'au moins un matériau isolant à base d'aérogel(s)sous forme d'au moins une couche fibreuse, de type mat(s) ou matelas ou nappe(s) formé(s) de fibres, formant une structure poreuse ou discontinue, renfermant des aérogels, **caractérisé en ce que** ledit produit comprend moins de 0,55% en poids d'agent(s) hydrophobant(s).

2. Produit isolant selon la revendication 1, **caractérisé en ce que** la conductivité thermique dudit produit est inférieure à 50 mW/m.K à 200°C, avantageusement inférieure à 50 mW/m.K à 300°C, et de façon particulièrement avantageuse inférieure ou égale à 60 mW/m.K à 400°C.

3. Produit isolant selon la revendication 1 ou 2, **caractérisé en ce qu'**il comprend moins de 0,5% avantageusement moins de 0,4%, voire moins de 0,25%, notamment moins de 0,1%, voire moins de 0.05% en poids d'agent(s) hydrophobant(s), et de préférence est dénué d'agent(s) hydrophobant(s).

4. Produit isolant selon l'une des revendications 1 à 3, **caractérisé en ce que** le taux de composants organiques dans ledit produit isolant est inférieur à 5,5% en poids dudit produit, en particulier inférieur à 3%, de préférence inférieur à 1,65%, ledit produit étant avantageusement uniquement minéral.

5. Produit isolant selon l'une des revendications 1 à 4, **caractérisé en ce que** ladite au moins une couche fibreuse comprend de 25 à 95% en poids d'aérogel(s) de 5 à 75% en poids de fibres.

6. Produit isolant selon l'une des revendications 1 à 5, **caractérisé en ce que** son épaisseur est inférieur à 50 mm.

7. Produit isolant selon l'une des revendications 1 à 6, **caractérisé en ce que** ladite au moins une couche fibreuse présente une masse volumique comprise entre 8 et 90 kg/m³.

8. Produit isolant selon l'une des revendications 1 à 7, **caractérisé en ce que** ladite au moins une couche fibreuse est formée de fibres choisies parmi les fibres de verre, les fibres de roches, les fibres céramiques et les fibres de basaltes.

9. Produit isolant selon la revendication 8, **caractérisé en ce que** les fibres sont des fibres de verre E ou C.

10. Four ou une partie de four fonctionnant entre 50 et 350°C, étant muni d'un produit isolant selon l'une des revendications 1 à 9.

11. Procédé d'obtention d'un produit isolant selon l'une des revendications 1 à 9, ledit procédé comprenant au moins une étape d'extraction, en particulier de calcination, du ou des agents hydrophobants, d'un matériau isolant formé d'aérogel(s) ou d'un produit incorporant ledit matériau de façon que le taux d'hydrophobants au sein du produit ou du matériau isolant formé d'aérogel devienne inférieur à 0.55% en poids, voire de façon à ce que le produit ou matériau soit avantageusement dénué d'hydrophobants, ledit matériau ou ledit produit comprenant notamment de 25 à 95% en poids d'aérogel(s),
ladite étape d'extraction étant effectuée en soumettant ledit produit ou matériau à un traitement thermique à une température d'au moins 320°C et inférieure à 550°C, pendant au moins 10 heures, et de préférence pendant au moins 12 h.

## Patentansprüche

1. Isolationsprodukt, das für die Wärmeisolierung eines Ofens oder eines Teils des Ofens angepasst ist, wobei das Produkt aus mindestens einem Isoliermaterial auf Basis von Aerogel(en) in Form mindestens einer Faserschicht ausgebildet wird, der Art Matte(n) oder Matratze oder Lage(n), die aus Fasern ausgebildet ist/sind, die eine poröse oder diskontinuierliche Struktur ausbildet, die Aerogele enthält,
**dadurch gekennzeichnet, dass** das Produkt zu weniger als 0,55 Gew.-% hydrophobe(s) Mittel umfasst.

2. Isolationsprodukt nach Anspruch 1, **dadurch gekennzeichnet, dass** die Wärmeleitfähigkeit des Produkts weniger als 50 mW/m.K bei 200 °C, vorteilhafterweise weniger als 50 mW/m.K bei 300 °C und besonders vorteilhaft weniger als oder gleich 60 mW/m.K bei 400 °C beträgt.

3. Isolationsprodukt nach Anspruch 1 oder 2, **dadurch gekennzeichnet, dass** es zu weniger als 0,5 Gew.-%, vorteilhafterweise zu weniger als 0,4 Gew.-% oder sogar zu weniger als 0,25 Gew.-%, insbesondere zu weniger als 0,1 Gew.-% oder sogar zu weniger als 0,05 Gew.-% hydrophobe(s) Mittel umfasst und vorzugsweise frei von hydrophobem/hydrophoben Mittel(n) ist.

4. Isolationsprodukt nach einem der Ansprüche 1 bis 3,
**dadurch gekennzeichnet, dass** der Gehalt an organischen Bestandteilen in dem Isolationsprodukt weniger als 5,5 Gew.-% des Produkts, insbesondere weniger als 3 Gew.-%, vorzugsweise weniger als 1,65 Gew.-% beträgt, wobei das Produkt vorteilhafterweise nur mineralisch ist.

5. Isolationsprodukt nach einem der Ansprüche 1 bis 4,
**dadurch gekennzeichnet, dass** die mindestens eine Faserschicht zu 25 bis 95 Gew.-% Aerogel(e) und zu 5 bis 75 Gew.-% Fasern umfasst.

6. Isolationsprodukt nach einem der Ansprüche 1 bis 5,
**dadurch gekennzeichnet, dass** seine Dicke weniger als 50 mm beträgt.

7. Isolationsprodukt nach einem der Ansprüche 1 bis 6,
**dadurch gekennzeichnet, dass** die mindestens eine Faserschicht eine Dichte zwischen 8 und 90 kg/m³ aufweist.

8. Isolationsprodukt nach einem der Ansprüche 1 bis 7,
**dadurch gekennzeichnet, dass** die mindestens eine Faserschicht aus Fasern ausgebildet ist, die aus Glasfasern, Steinfasern, Keramikfasern und Basaltfasern ausgewählt sind.

9. Isolationsprodukt nach Anspruch 8, **dadurch gekennzeichnet, dass** die Fasern aus E- oder C-Glas sind.

10. Ofen oder Teil eines Ofens, der zwischen 50 und 350 °C betrieben wird, der mit einem Isolationsprodukt nach einem der Ansprüche 1 bis 9 ausgestattet ist.

11. Verfahren zum Erhalten eines Isolationsprodukts nach einem der Ansprüche 1 bis 9, das Verfahren umfassend mindestens einen Schritt einer Extraktion, insbesondere einer Kalzinierung, des oder der hydrophoben Mittel/s aus einem Isoliermaterial, das aus Aerogel(en) ausgebildet ist, oder aus einem Produkt, das das Material so einarbeitet, dass der Gehalt an Hydrophobierungsmitteln innerhalb des Produkts oder des Isoliermaterials, das aus Aerogel ausgebildet ist, weniger als 0,55 Gew.-% wird, oder sogar dass das Produkt oder Material vorteilhafterweise frei von Hydrophobierungsmitteln ist, das Material oder das Produkt umfassend insbesondere zu 25 bis 95 Gew.-% Aerogel(e),
wobei der Extraktionsschritt durchgeführt wird, indem das Produkt oder das Material einer Wärmebehandlung bei einer Temperatur von mindestens 320 °C und weniger als 550 °C für mindestens 10 Stunden und vorzugsweise für mindestens 12 h unterzogen wird.

## Claims

1. An insulating product, suitable for the thermal insulation of an oven or a part of an oven, said product being formed from at least one insulating material based on aerogel(s) in the form of at least one fibrous layer, of the type of a mat or mats or pad or lap or laps formed from fibers, forming a porous or discontinuous structure, containing aerogels, **characterized in that** the said product comprises less than 0.55% by weight of hydrophobizing agent(s.

2. The insulating product as claimed in claim 1, **characterized in that** the thermal conductivity of said product is less than 50 mW/m.K at 200°C, advantageously less than 50 mW/m.K at 300°C, and particularly advantageously less than or equal to 60 mW/m.K at 400°C.

3. The insulating product as claimed in either of claims 1 and 2, **characterized in that** it comprises less than 0.5%, in particular less than 0.4%, or even less than 0.25%, in particular less than 0.1%, or even less than 0.05% by weight of hydrophobizing agent(s), and preferably being devoid of hydrophobizing agent(s).

4. The insulating product as claimed in one of claims 1 to 3, **characterized in that** the content of organic components in the insulating product is less than 5.5% by weight of said product, in particular less than 3%, preferably less than 1.65%, said product advantageously being solely mineral.

5. The insulating product as claimed in one of claims 1 to 4, **characterized in that** the said at least one fibrous layer comprises from 25% to 95% by weight of aerogel(s) and from 5% to 75% by weight of fibers.

6. The insulating product as claimed in one of claims 1 to 5, **characterized in that** its thickness is less than 50 mm.

7. The insulating product as claimed in one of claims 1 to 6, **characterized in that** the said at least one fibrous layer has a density which is comprised between 8 and 90 kg/m³.

8. The insulating product as claimed in one of claims 1 to 7, **characterized in that** that the said at least one fibrous layer is formed by fibers being chosen from glass fibers, glass wool, rock fibers, ceramic fibers and basalt fibers.

9. The insulating product as claimed in claim 8, **characterized in that** the fibers are glass fibers of E- or C-glass.

10. An oven or a part of an oven operating between 50 and 350°C, being equipped with an insulating product as claimed in one of claims 1 to 9.

11. A process for obtaining an insulating product as claimed in one of claims 1 to 9, said process comprising at least one step of extracting, in particular of calcinating, of the hydrophobizing agent(s), of an insulating material formed from aerogel(s) or of a product incorporating said material in such that the content of hydrophobizing agents in the insulating product or material formed from aerogel becomes less than 0.55% by weight, or even such that the product or material is devoid of hydrophobizing agents, said material or said product comprising in particular from 25% to 95% by weight of aerogel(s),
said extraction step being carried out by subjecting said product or material to a heat treatment at a temperature of at least 320°C and less than 550°C, for at least 10 hours, and preferably for at least 12 h.
